**Europäisches Patentamt**

(19) **European Patent Office**

**Office européen des brevets**

(11) Veröffentlichungsnummer : **0 042 492**
**B1**

---

(12) **EUROPÄISCHE PATENTSCHRIFT**

---

(45) Veröffentlichungstag der Patentschrift :
**15.08.84**

(21) Anmeldenummer : **81103811.6**

(22) Anmeldetag : **18.05.81**

(51) Int. Cl.³ : **F 16 K  1/22, F 23 L 13/08**

---

(54) **Vorrichtung zum Absperren grosser Rohrleitungen.**

---

(30) Priorität : **24.06.80 DE 3023639**

(43) Veröffentlichungstag der Anmeldung :
**30.12.81 Patentblatt 81/52**

(45) Bekanntmachung des Hinweises auf die Patenterteilung : **15.08.84 Patentblatt 84/33**

(84) Benannte Vertragsstaaten :
**BE DE FR GB NL**

(56) Entgegenhaltungen :
**DE-A- 2 828 323**
**DE-C-   802 855**
**DE-U- 1 856 820**
**DE-U- 7 427 871**
**GB-A-   922 589**
**US-A- 3 030 065**

(73) Patentinhaber : **PKS-Engineering GmbH & Co. KG**
**Regelkamp 12**
**D-4720 Beckum 2 (DE)**

(72) Erfinder : **Janich, Hans-Jürgen**
**Regelkamp 12**
**D-4720 Beckum (DE)**

(74) Vertreter : **Tetzner, Volkmar, Dr.-Ing. Dr. Jur.**
**Van-Gogh-Strasse 3**
**D-8000 München 71 (DE)**

---

**Beschreibung**

Die Erfindung betrifft eine Vorrichtung zum Absperren großer Rohrleitungen, enthaltend mehrere durch einen gemeinsamen Antrieb betätigbare Schwenkklappen, wobei eine Betätigungsstange gelenkig mit dem einen Arm eines zweiarmig ausgebildeten, schwenkbar gelagerten ersten Hebels verbunden ist, dessen anderer Arm auf eine Feder wirkt, die in Eingriff mit dem einen Arm eines zweiarmig ausgebildeten zweiten Hebels steht, der drehfest mit der Klappenwelle verbunden ist.

Bei bekannten Vorrichtungen dieser Art (DE-A1-2 828 323 und GB-A-922 589) ist der mit der Betätigungsstange verbundene erste Hebel über eine Nabe drehbar auf der Klappenwelle gelagert, die ihrerseits drehfest mit dem zweiten Hebel verbunden ist.

Der Erfindung liegt die Aufgabe zugrunde, eine Vorrichtung dieser Art dahin weiterzuentwickeln, daß der Raumbedarf der Hebelanordnung verringert wird, eine günstigere Belastung der Hebel (insbesondere ein kleineres Biegemoment) erreicht und eine Vereinfachung der Bauweise erzielt wird.

Diese Aufgabe wird erfindungsgemäß dadurch gelöst, daß der andere Arm des zweiten Hebels die Schwenklagerstelle für den ersten Hebel bildet, und daß die Schwenklagerstelle auf der einen Seite der Klappenwelle vorgesehen ist, während im Bereich der gegenüberliegenden Seite der Klappenwelle die Feder sowie die mit ihr in Eingriff stehenden Hebelarme angeordnet sind.

Bei der erfindungsgemäßen Vorrichtung ist daher der mit der Betätigungsstange verbundene erste Hebel nicht auf der Klappenwelle, sondern auf einem Arm des zweiten Hebels gelagert. Dadurch ergibt sich ein wesentlich verringerter Raumbedarf, eine günstigere Belastung der Hebel (insbesondere ein kleineres Biegemoment) sowie eine wesentlich vereinfachte Bauweise. So ist insbesondere auf der Klappenwelle nunmehr nur eine einzige Nabe vorgesehen, die die drehfeste Verbindung des zweiten Hebels mit der Klappenwelle herstellt.

Aufgrund der durch die erfindungsgemäße Bauweise erzielten günstigeren Hebelverhältnisse entsteht ferner eine geringere Belastung der Federn. Es können daher weichere Federn mit großem Federweg und flacher Kennlinie Verwendung finden, was eine bessere Funktion sowie eine verlängerte Lebensdauer gewährleistet.

Diese und weitere Merkmale der Erfindung gehen aus den Unteransprüchen sowie aus der folgenden Beschreibung eines in der Zeichnung veranschaulichten Ausführungsbeispieles hervor. Es zeigen

Figur 1 eine Seitenansicht eines Teiles der Absperrvorrichtung ;

Figur 2 eine Teil-Stirnansicht der in Fig. 1 gezeigten Vorrichtung (gemäß Pfeil II in Fig. 1) ;

Figur 3 eine im vergrößerten Maßstab dargestellte Seitenansicht der für die Schwenkbewegung einer Schwenkklappe bestimmten Zusammenordnung zweier Hebel ;

Figur 4 eine Schnittansicht entlang der Linie VI-VI in Fig. 3.

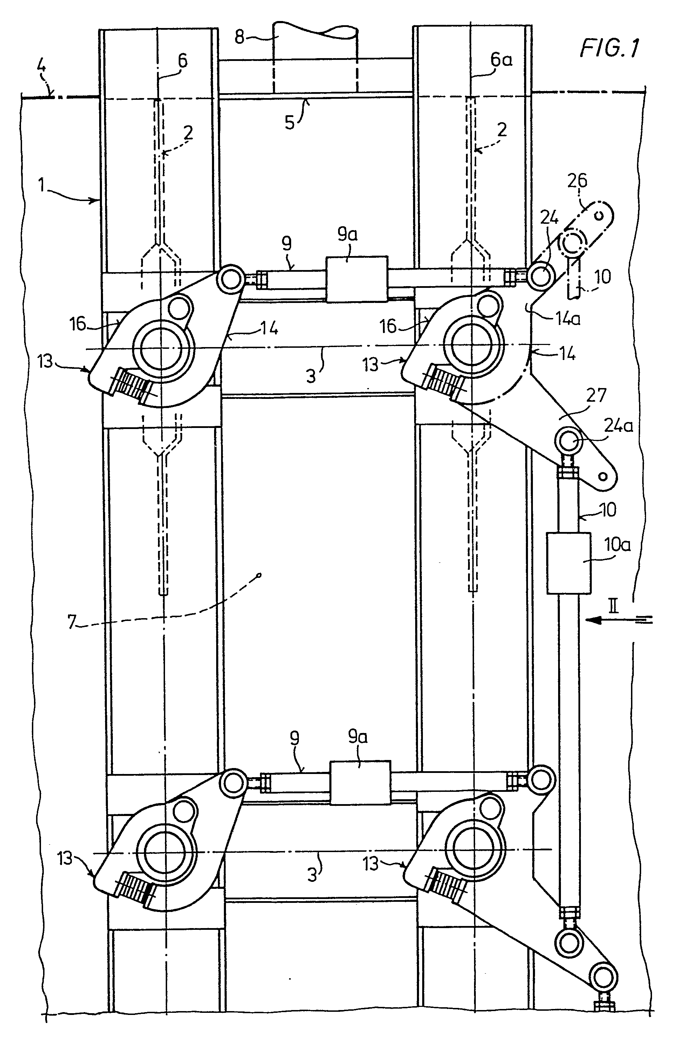

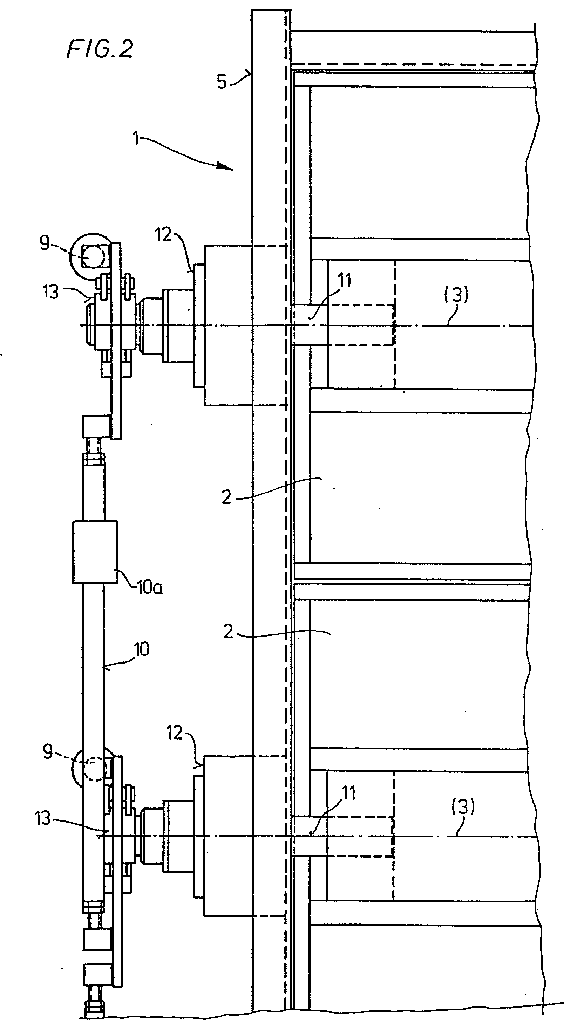

Anhand der Fig. 1 und 2 sei zunächst der allgemeine Aufbau der Vorrichtung 1 beschrieben, die zum Absperren großer Rohrleitungen dient. Die weitgehend schematisch gehaltene Zeichnung zeigt im wesentlichen nur die für die Erläuterung der Erfindung notwenigen Teile.

Die Absperrvorrichtung 1 enthält eine Anzahl von gleichartig ausgebildeten Schwenkklappen 2, die durch einen gemeinsamen, nicht näher veranschaulichten Antrieb betätigt werden können, wobei es sich bei diesem Antrieb sowohl um einen Handantrieb als auch um einen Motorantrieb handeln kann.

Betrachtet man Fig. 1, so erkennt man, daß in mehreren etwa parallel zur Rohrleitungs-Längsachse liegenden Horizontalebenen jeweils zwei Schwenkklappen 2 (in Fig. 1 nur in der oberen Hälfte gestrichelt angedeutet) mit Abstand — in bezug auf die bei 4 nur gestrichelt angedeutete Rohrleitung, mit axialem Abstand — voneinander im Gehäuse 5 der Vorrichtung 1 angeordnet sind. Außerdem sind in zwei senkrecht zur Rohrleitungslängsachse verlaufenden, einen axialen Abstand voneinander aufweisenden Querebenen 6, 6a, in denen jeweils die beiden zuvorgenannten Schwenkklappen 2 jeder Horizontalebene 3 liegen, jeweils mehrere Schwenkklappen 2 angeordnet ; bei der Anordnung gemäß Fig. 1 verlaufen die Querebenen 6, 6a etwa vertikal, so daß also die in diesen Vertikalebenen 6, 6a liegenden Klappen 2 je eine vertikale Klappengruppe bilden, die dabei einen Abstand in Achsrichtung der Rohrleitung 4 voneinander aufweisen. Die Schwenkklappen 2 jeder in einer Vertikalebene 6 bzw. 6a liegenden Klappengruppe bilden im geschlossenen Zustand, also im Absperrzustand, der Vorrichtung 1 eine den Rohrleitungs-Querschnitt vollkommen absperrende Fläche. In Fig. 1 läßt sich ferner erkennen, daß zwischen den beiden in den Vertikalebenen 6, 6a angeordneten Klappengruppen ein Raum 7 vorhanden ist, der über einen am Gehäuse 5 angeordneten Rohranschluß 8 mit einem Sperrmedium (Gas oder Flüssigkeit) versorgt werden kann.

Wie Fig. 1 weiterhin zeigt, sind die in den Horizontalebenen 3 mit Abstand voneinander angeordneten Schwenkklappen 2 jeweils durch eine Betätigungsstange 9 im Sinne einer gemeinsamen Schwenkbetätigung miteinander verbunden. Diese Betätigungsstangen 9 liegen beim dargestellten Ausführungsbeispiel etwa horizontal. Es sind jedoch nicht nur die in Richtung der Rohrleitungslängsachse einander benachbarten Schwenkklappen 2, sondern auch die in den Querebenen, also in den Vertikalebenen 6, 6a gruppenweise zusammengefaßten Schwenkklappen 2 und somit alle Schwenkklappen der Vorrichtung 1 im Sinne einer gemeinsamen Schwenkbetätigung miteinander verbunden. Aus diesem Grunde sind bei den in den Vertikalebenen 6, 6a angeordneten Klappengruppen nur von den Schwenkklappen 2 der einen Gruppe — in Fig. 1 die Gruppe in der Vertikalebene 6a — die jeweils einander benachbarten beiden Schwenkklappen 2 durch eine gemeinsame Betätigungsstange 10 verbunden. Sowohl die ersten Betätigungsstangen 9 als auch die zweiten Betätigungsstangen 10 sind in ihrer Länge justierbar, wie durch Gewinde-Justierstücke 9a bzw. 10a in Fig. 1 angedeutet ist.

Jede Schwenkklappe 2 ist im veranschaulichten Ausführungsbeispiel an jedem axialen Ende mit einem Wellenstumpf 11 versehen, über den sie in einem Lager 12 gelagert ist. Die Schwenkklappen 2 sind dabei vorzugsweise als zweiflügelige Klappen ausgeführt, unter Bezugnahme auf ihre Wellenachse, die jeweils in der Horizontalebene 3 liegt.

Bei der veranschaulichten Ausführungsform ist die bisher beschriebene Vorrichtung 1 somit mit zwei Quergruppen von jalousieartig zusammengeordneten Schwenkklappen 2 ausgebildet.

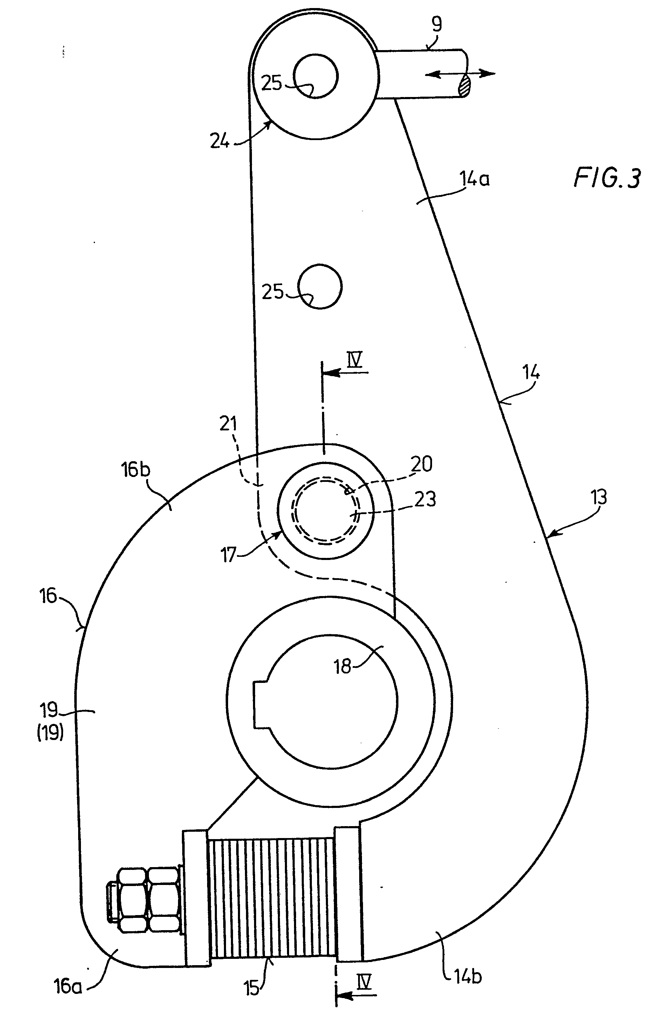

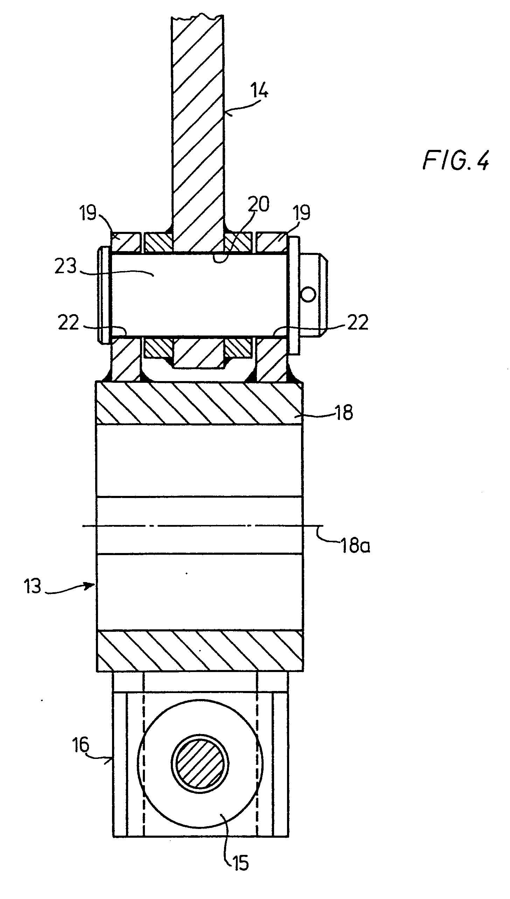

Damit auf jede Schwenkklappe 2 die vom gemeinsamen Antrieb ausgehende und von den Betätigungsstangen 9 bzw. 10 übertragene Betätigungsbewegung ausgeübt werden kann, ist zumindest auf dem freien Ende des Wellenstumpfes 11 am einen axialen Ende jeder Schwenkklappe 2 eine Hebelanordnung 13 vorgesehen, die mit dem einen Ende der zugehörigen Betätigungsstange 9 bzw. 10 verbunden ist. Eine solche Hebelanordnung 13 sei im folgenden anhand der Fig. 3 und 4 näher beschrieben.

Jede Hebelanordnung 13 enthält einen mit dem entsprechenden Ende einer Betätigungsstange, z. B. 9, gelenkig verbundenen ersten Hebel 14, der über eine Feder 15 mit einem zweiten Hebel in Eingriff steht, der drehfest mit der Klappenwelle, also mit dem zugehörigen Wellenstumpf 11 verbunden ist. Hierbei steht der zweiarmig ausgebildete erste Hebel 14 über seinen einen, ersten Arm 14a mit der Betätigungsstange 9 in Verbindung, während der andere, zweite Arm 14b dieses ersten Hebels 14 auf die Feder 15 wirkt (siehe Fig. 3) ; ferner steht hier der gleichfalls zweiarmig ausgebildete zweite Hebel 16 mit seinem einen, ersten Arm 16a mit der Feder 15 in Verbindung, während sein anderer, zweiter Hebelarm 16b die Schwenkstelle 17 für den ersten Hebel 14 bildet. Die gegeneinander gerichteten Hebelarme 14b und 16a beider Hebel 14 bzw. 16 werden also durch die Anordnung der beispielsweise als Federpaket ausgebildeten Feder 15 in ihrer Betätigungswirkung gedämpft.

Bei der in den Fig. 3 und 4 veranschaulichten Hebelanordnung 13 enthält der zweite Hebel 16 eine mit dem hier nicht veranschaulichten Wellenstumpf 11 drehfest verbundene Nabe 18 sowie zwei mit Abstand parallel nebeneinander und senkrecht zur Nabenlängsachse 18a auf dem Außenumfang der Nabe befestigte (vorzugsweise angeschweißte) Formplatten 19, die gleichartig ausgebildet sind. Die beiden so ausgebildeten Formplatten 19 bilden gemeinsam die beiden Hebelarme 16a, 16b, und zwischen ihren die Schwenkstelle 17 für den ersten Hebel 14 bildenden Enden (also am Hebelarm 16b) nehmen sie den eine Schwenklagerbohrung 20 enthaltenden Mittelteil 21 des ersten Hebels 14 auf. Die Schwenklagerstelle 17 kann konstruktiv verhältnismäßig einfach ausgeführt sein, indem sie im wesentlichen durch die beiden im Bereich des Hebelarmes 16b befindlichen Enden der Formplatten 19 sowie einen durch die Schwenklagerbohrung 20 im ersten Hebel 14 und zwei in den Formplattenenden 19 vorgesehene Bohrungen 22 des zweiten Hebels 16 hindurchgeführten Schwenklagerzapfen 23 gebildet wird.

Während die Nabe 18 des zweiten Hebels 16 drehfest mit dem zugehörigen Wellenstumpf 11 der Klappe 2 verbunden ist (beispielsweise unter Zuhilfenahme einer Paßfeder oder eines Keiles), ist am ersten Arm 14a des ersten Hebels 14 eine Gelenkverbindung zwischen dem ersten Hebel 14 und der Betätigungsstange 9 in üblicher Weise vorgesehen. Für diese Gelenkverbindung 24 kann der erste Hebelarm 14a — wie angedeutet — mehrere Bohrungen 25 aufweisen, so daß im Bedarfsfalle die wirksame Länge dieses Hebelarmes 14a verändert werden kann, indem die Gelenkstelle 24 an der einen oder anderen Bohrung 25 angebracht wird.

Bei der in den Fig. 3 und 4 veranschaulichten Ausbildung der Hebelanordnung 13 ist die Schwenklagerstelle 17 für den ersten Hebel 14 auf der einen Seite der Klappenwelle, also des Wellenstumpfes 11, vorgesehen, während etwa im Bereich der gegenüberliegenden Seite der Klappenwelle die Feder 15 sowie die mit ihr in Eingriff stehenden Hebelarme 14b und 16a des ersten und zweiten Hebels 14 bzw. 16 angeordnet sind. Auf diese Weise ergibt sich eine besonders günstige Hebelwirkung und somit zuverlässige Klappenbetätigung bei konstruktiv einfacher Bauweise.

Der mit der Betätigungsstange 9 verbundene erste Arm 14a des ersten Hebels 14 ist beim Ausführungsbeispiel gemäß den Fig. 3 und 4 auf der gleichen Seite der Klappenwelle angeordnet wie die Schwenklagerstelle 17. Betrachtet man in diesem Sinne auch die Fig. 1, dann erkennt man, daß die zuletzt erwähnte Anordnung im Prinzip auf die Hebelanordnungen 13 beider in den Vertikalebenen 6, 6a angeordneten Klappengruppen zutrifft. Bei der in der einen Vertikalebene 6a angeordneten Klappengruppe muß jedoch ferner dafür Sorge getragen werden, daß auch eine Gelenkverbindung von einander benachbarten Klappen 2 mit der zugehörigen zweiten Betätigungsstange 10 ermöglicht ist. Zu diesem Zweck kann bei der Hebelanordnung 13 jeder Klappe dieser Gruppe der erste Hebel 14 an seinem ersten Arm 14a, der mit der ersten Betätigungsstange 9 verbunden ist, eine zur Anlenkung der zweiten Betätigungsstange 10 bestimmte Verlängerung 26 aufweise, wie sie in Fig. 1 (rechts oben) strichpunktiert angedeutet ist. Eine zweite Möglichkeit der Gelenkverbindung der zweiten Betätigungsstange mit dem ersten Hebel 14 ist in Fig. 1 (in der rechten Hälfte) durch ausgezogene Linien veranschaulicht. In diesem Falle weist der erste Hebel 14 die bereits anhand der Fig. 3 und 4 beschriebene Gelenkverbindung 24 an seinem Hebelarm 14a auf, während er zusätzlich noch einen festen, hebelarmartigen Ansatz 27 besitzt zur Anlenkung (Gelenkverbindung 24a) der zweiten Betätigungsstange 10. Diese Ausbildung kann aus Gründen der Gesamtanordnung und -betätigung vielfach günstiger sein als die zuerst genannte.

**Ansprüche**

1. Vorrichtung zum Absperren großer Rohrleitungen, enthaltend mehrere durch einen gemeinsamen Antrieb betätigbare Schwenkklappen, wobei eine Betätigungsstange (9) gelenkig mit dem einen Arm (14a) eines zweiarmig ausgebildeten, schwenkbar gelagerten ersten Hebels (14) verbunden ist, dessen anderer Arm (14b) auf eine Feder (15) wirkt, die in Eingriff mit dem einen Arm (16a) eines zweiarmig ausgebildeten zweiten Hebels (16) steht, der drehfest mit der Klappenwelle (11) verbunden ist, dadurch gekennzeichnet, daß der andere Arm (16b) des zweiten Hebels (16) die Schwenklagerstelle (17) für den ersten Hebel (14) bildet und daß die Schwenklagerstelle (17) auf der einen Seite der Klappenwelle (11) vorgesehen ist, während im Bereich der gegenüberliegenden Seite der Klappenwelle (11) die Feder (15) sowie die mit ihr in Eingriff stehenden Hebelarme (14b, 16a) angeordnet sind.

2. Vorrichtung nach Anspruch 1, dadurch gekennzeichnet, daß der zweite Hebel (16) eine mit der Klappenwelle (11) drehfest verbundene Nabe (18) sowie zwei mit Abstand parallel nebeneinander und senkrecht zur Nabenachsrichtung auf dem Außenumfang der Nabe befestigte Formplatten (19) enthält, die gemeinsam die beiden Hebelarme (16a, 16b) bilden und zwischen ihren die Schwenklagerstelle (17) für den ersten Hebel (14) bildenden Enden den eine Schwenklagerbohrung (20) enthaltenden Teil (21) des ersten Hebels aufnehmen.

3. Vorrichtung nach Anspruch 2, dadurch gekennzeichnet, daß die Schwenklagerstelle (17) für den ersten Hebel (14) im wesentlichen durch die beiden genannten Enden der Formplatten (19) des zweiten Hebels (16) sowie einen durch die Schwenklagerbohrung (20) im ersten Hebel und zwei an den Formplattenenden vorgesehene Bohrungen (22) des zweiten Hebels (16) hindurchgeführten Schwenklagerzapfen (23) gebildet ist.

4. Vorrichtung nach wenigstens einem der vorhergehenden Ansprüche, dadurch gekennzeichnet, daß der mit der Betätigungsstange (z. B. 9) verbundene eine, erste Arm (14a) des ersten Hebels (14) auf der gleichen Seite der Klappenwelle (11) angeordnet ist wie die Schwenklagerstelle (17) dieses ersten Hebels.

5. Vorrichtung nach wenigstens einem der Ansprüche 1 bis 4, dadurch gekennzeichnet, daß wenigstens zwei Schwenkklappen (2) in einer etwa parallel zur Rohrleitungs-Längsachse liegenden Ebene (3) mit Abstand voneinander angeordnet und durch eine Betätigungsstange (9) im Sinne einer gemeinsamen Schwenkbetätigung verbunden sind.

6. Vorrichtung nach Anspruch 5, dadurch gekennzeichnet, daß in wenigstens zwei senkrecht zur Rohrleitungs-Längsachse verlaufenden, einen axialen Abstand voneinander aufweisenden Querebenen (6, 6a) jeweils mehrere Schwenkklappen (2) so angeordnet sind, daß jeweils die in einer Querebene liegenden Schwenkklappen im geschlossenen Zustand eine den Rohrleitungs-Querschnitt vollkommen absperrende Fläche bilden.

7. Vorrichtung nach Anspruch 6, dadurch gekennzeichnet, daß bei den in den Querebenen (6, 6a) angeordneten Klappengruppen nur von der einen Gruppe (6a) die jeweils einander benachbarten beiden Schwenkklappen (2) durch eine gemeinsame Betätigungsstange (10) verbunden sind, wobei an die ersten Hebel (14) der in der Querebene (6a) durch Betätigungsstangen (10) miteinander verbundenen Schwenkklappen (2) jeweils zwei Betätigungsstangen (9, 10) angreifen.

8. Vorrichtung nach Anspruch 7, dadurch gekennzeichnet, daß in der Klappengruppe, in der die Schwenkklappen (2) in der Querebene (6a) miteinander verbunden sind, der erste Hebel (14) jeder Schwenkklappe (2) an seinem mit der ersten Betätigungsstange (9) verbundenen ersten Arm (14a) eine zur Anlenkung der zweiten Betätigungsstange (10) bestimmte Verlängerung (26) aufweist.

9. Vorrichtung nach Anspruch 7, dadurch gekennzeichnet, daß in der Klappengruppe, in der die Schwenkklappen (2) in der Querebene (6a) miteinander verbunden sind, der erste Hebel (14) jeder Schwenkklappe neben seinem mit der ersten Betätigungsstange (9) verbundenen ersten Arm (14a) noch einen festen, hebelarmartigen Ansatz (27) zur Anlenkung der zweiten Betätigungsstange (10) aufweist.

10. Vorrichtung nach den Ansprüchen 5 und 6, dadurch gekennzeichnet, daß zwischen zwei in Richtung der Rohrleitungs-Längsachse mit Abstand voneinander angeordneten Klappengruppen ein Raum (7) mit einem Rohranschluß (8) für ein Sperrmedium vorhanden ist.

11. Vorrichtung nach den vorhergehenden Ansprüchen, dadurch gekennzeichnet, daß die Betätigungsstangen (9, 10) in ihrer Länge justierbar sind.

12. Vorrichtung nach Anspruch 1, dadurch gekennzeichnet, daß jede Schwenkklappe (2) — mit bezug auf ihre Wellenachse — als zweiflügelige Klappe ausgeführt ist.

**Claims**

1. A device for shutting off large pipes, comprising several pivotal flaps operable by a common drive, an actuating rod (9) being pivotally connected to one arm (14a) of a double-armed pivotal first lever (14) whilst the other arm (14b) acts on a spring (15) which engages one arm (16a) of a double-armed second lever (16) fixedly connected to the flap shaft (11), characterised in that the other arm (16b) of the second lever (16) forms the pivot bearing (17) for the first lever (14) and in that the pivot bearing (17) lies at one side of the flap shaft (11) whilst the spring (15) and the lever arms (24b, 16a) in engagement therewith are arranged at the opposite side of the flap shaft (11).

2. A device as claimed in Claim 1, characterised in that the second lever (16) comprises a hub (18) fixedly connected to the flap shaft (11) and two match plates (19) which are fixed to the outer periphery of the hub at a distance from and parallel to one another perpendicularly of the axis of the hub and which together form the two lever arms (16a, 16b) and, between their ends forming the pivot bearing (17) for the first lever (14), accommodate that part (21) of the first lever which contains a bore (20) for the pivot bearing.

3. A device as claimed in Claim 2, characterised in that the pivot bearing (17) for the first lever (14) is essentially formed by said ends of the match plates (19) of the second lever (16) and by a pivot pin (23) guided through the bore (20) for the pivot bearing in the first lever and through two bores (22) provided in the ends of the match plates of the second lever (16).

4. A device as claimed in at least one of the preceding Claims, characterised in that the first arm (14a) of the first lever (14) which is connected to the actuating rod (e. g. 9) is arranged at the same side of the flap shaft (11) as the pivot bearing (17) for this first lever.

5. A device as claimed in at least one of Claims 1 to 4, characterised in that at least two pivotal flaps (2) are arranged at a distance apart from one another in a plane (3) lying substantially parallel to the longitudinal axis of the pipe and are connected by an actuating rod (9) to make a common pivoting movement.

6. A device as claimed in Claim 5, characterised in that several pivotal flaps (2) are arranged in at least two transverse planes (6, 6a) extending perpendicularly of the longitudinal axis of the pipe at an axial distance from one another in such a way that, in the closest position, the pivotal flaps lying in one transverse plane form a surface which completely shuts off the pipe cross-section.

7. A device as claimed in Claim 6, characterised in that it is only the two adjacent pivotal flaps (2) of one of the groups (6a) arranged in the transverse planes (6, 6a) which are connected together by a common actuating rod (10), two actuating rods (9, 10) acting on the first levers (14) of the pivotal flaps (2) connected to one another in the transverse plane (6a) by actuating rods (10).

8. A device as claimed in Claim 7, characterised in that, in the group of flaps in which the pivotal flaps (2) are connected together in the transverse plane (6a), the first lever (14) of each pivotal flap (2) is provided on its first arm (14a) connected to the first actuating rod (9) with an extension (26) intended for the pivotal connection of the second actuating rod (10).

9. A device as claimed in Claim 7, characterised in that, in the group of flaps in which the pivotal flaps (2) are connected together in the transverse plane (6a), the first lever (14) of each pivotal flap is provided, apart from its first arm (14a) connected to the first actuating rod (9), with a lever arm like fixed extension (27) for the pivotal connection of the second actuating rod (10).

10. A device as claimed in Claims 5 and 6, characterised in that a space (7) with a pipe connection (9) for a sealing medium is provided between two groups of flaps arranged at a distance from one another in the direction of the longitudinal acis of the pipe.

11. A device as claimed in the preceding Claims, characterised in that the actuating rods (9, 10) are adjustable in length.

12. A device as claimed in Claim 1, characterised in that each pivotal flap (2) is in the form of a two-vaned flap relative to its shaft axis.

## Revendications

1. Dispositif d'obturation de grosses canalisations comprenant plusieurs clapets pivotants actionnés par une commande commune, une tige d'actionnement (9) étant reliée par articulation à l'un des bras (14a) d'un premier levier pivotant (14) à deux bras, dont l'autre bras (14b) agit sur un ressort (15) qui attaque l'un des bras (16a) d'un second levier à deux bras (16) qui est solidaire en rotation de l'arbre (11) du clapet, dispositif caractérisé en ce que l'autre bras (16b) du second levier (16) forme le point de pivotement (17) du premier levier (14) et le point de pivotement (17) se trouve sur un côté de l'arbre (11) du clapet tandis que le ressort (15) et les bras de levier (14b, 16a) auxquels ce dernier est relié se trouvent de l'autre côté de l'arbre du clapet.

2. Dispositif selon la revendication 1, caractérisé en ce que le second levier (16) comprend un moyeu (18) solidarisé en rotation avec l'arbre (11) du clapet, ainsi que deux plaques profilées (19) fixées à la circonférence du moyeu perpendiculairement à la direction de l'axe de ce dernier, ces plaques formant ensemble les deux bras de levier (16a, 16b) et logeant entre leur extrémité formant le point de pivotement (17) du premier levier (14) la partie (21) de ce dernier qui comprend un trou (20) formant un coussinet d'articulation.

3. Dispositif selon la revendication 2, caractérisé en ce que le point de pivotement (17) du premier levier (14) est formé essentiellement de l'extrémité mentionnée des deux plaques profilées (19) du second levier (16) ainsi que d'un tourillon (23) passant par le trou (20) formant coussinet dans le premier levier et par deux trous (22) prévus à l'extrémité des plaques profilées du second levier (16).

4. Dispositif selon l'une au moins des revendications précédentes, caractérisé en ce que le premier bras (14a), relié à la tige d'actionnement (par exemple 9), du premier levier (14) est disposé du même côté de l'arbre (11) du claquet que le point de pivotement (17) de ce premier levier.

5. Dispositif selon l'une au moins des revendications 1 à 4, caractérisé en ce qu'au moins deux clapets pivotants (2) sont disposés à distance l'un de l'autre dans un plan (3) sensiblement parallèle à l'axe de symétrie longitudinal de la canalisation et sont reliés par une tige (9) constituant un élément d'actionnement commun commandant leur pivotement.

6. Dispositif selon la revendication 5, caractérisé en ce que plusieurs clapets pivotants (2) sont disposés dans au moins deux plans transversaux (6, 6a) perpendiculaires à l'axe de symétrie longitudinal de la canalisation et placés à distance l'un de l'autre dans la direction de cet axe de manière que les clapets situés dans un plan transversal forment une surface d'obturation totale de la section de la canalisation lorsqu'ils sont en position de fermeture.

7. Dispositif selon la revendication 6, caractérisé en ce que seuls les deux clapets voisins (2) de l'un (6a) des groupes de clapets disposés dans les plans transversaux (6, 6a) sont reliés par une tige d'actionnement commune (10), tandis que deux tiges d'actionnement (9, 10) attaquent les premiers leviers (14) des clapets (2) reliés dans le plan transversal (6a) par les tiges d'actionnement (10).

8. Dispositif selon la revendication 7, caractérisé en ce que le premier levier (14) de chaque clapet pivotant (2) du groupe dans lequel les clapets (2) sont reliés dans le plan transversal (6a) comporte sur son premier bras (14a), qui est relié à la première tige d'actionnement (9), un prolongement (26) destiné à l'articulation de la seconde tige d'actionnement (10).

9. Dispositif selon la revendication 7, caractérisé en ce que le premier levier (14) de chaque clapet (2) du groupe dans lequel les clapets sont reliés dans le plan transversal (6a) comprend, en plus de son premier bras (14a) qui est relié à la première tige d'actionnement (9), un talon fixe (27) en forme de bras de levier destiné à l'articulation de la seconde tige d'actionnement (10).

10. Dispositif selon les revendications 5 et 6, caractérisé en ce qu'un espace (7) communiquant avec un raccord tubulaire (8) permettant l'arrivée d'un fluide d'obturation est ménagé entre deux groupes de clapets placés à distance l'un de l'autre dans la direction de l'axe de symétrie longitudinal de la canalisation.

11. Dispositif selon l'une quelconque des revendications précédentes, caractérisé en ce que la longueur des tiges d'actionnement (9, 10) est réglable.

12. Dispositif selon la revendication 1, caractérisé en ce que chaque clapet (2) est à deux ailes — par rapport à l'axe de son arbre.

0 042 492

FIG.1

FIG.2

FIG.3

FIG. 4